# EUROPEAN PATENT SPECIFICATION

(11) **EP 3 551 513 B1**
(45) Date of publication and mention of the grant of the patent: **28.09.2022**
(21) Application number: 17828999.7
(22) Date of filing: 07.12.2017
(51) Int. Cl.: B60T 8/32, B60W 50/16

(54) **BRAKING SYSTEM**
BREMSSYSTEM
SYSTÈME DE FREINAGE

(30) Priority: 07.12.2016 GB 201620811
(43) Date of publication of application: 16.10.2019
(73) Proprietor: Bentley Motors Limited, Crewe, Cheshire CW1 3PL (GB)
(72) Inventor: O MEACHAIR, Deaglan, Nantwich Cheshire CW5 7DR (GB); CRUMPTON, Matthew, Nantwich Cheshire CW5 6RJ (GB)
(74) Representative: Wilson Gunn
(86) International application number: PCT/GB2017/053685
(87) International publication number: WO 2018/104740

(56) References cited:
- DE-A1-102007 011 739
- GB-A- 2 523 589
- JP-A- 2006 281 803
- US-A- 6 007 160
- US-A1- 2015 001 921

## Description

### Technical Field of the Invention

The present invention relates to a braking system for a vehicle and particularly but not exclusively a braking system having regenerative and dissipative brakes, and to a vehicle fitted with such a braking system.

### Background to the Invention

Automobiles with an electric propulsion system, such as those with a hybrid drive system comprising an internal combustion engine an electric traction motor and an electric battery, as well as pure electric vehicles, typically deploy regenerative braking in order to recover and store the vehicle's kinetic energy for use in propelling the vehicle. This is achieved by using an electric traction motor in reverse, as a generator, to convert rotational kinetic energy from the vehicle's road wheels to electrical energy which is stored in an electrical battery on the vehicle.

Owing to the capacity of typical electrical traction motors and other characteristics of electrical traction systems these regenerative braking systems cannot absorb energy as rapidly as it can be dissipated by a conventional friction braking system, and their ability to absorb energy can vary with operating conditions such as vehicle speed. Consequently a friction braking system is usually also provided, to supplement and provide a back up to the regenerative system, and a brake control system is provided to distribute braking effort between the friction and regenerative systems. The brake control system is usually arranged to distribute braking effort between the two braking systems to maximise energy recovery, whilst maintaining the feel of a conventional friction braking system to the driver.

In practice the amount of energy that is recovered by regenerative braking systems is limited by a driver's driving style. Heavy braking usually requires both regenerative and friction brakes to operate. Whenever the friction brakes are deployed energy is dissipated that might otherwise be recovered.

It is known to provide a visual feedback to a driver to indicate when energy is being recovered so that the driver can modify braking behaviour to optimise energy recovery. However, such displays provide a potentially dangerous distraction to a driver during a braking manoeuvre and so are often ignored. Also, there is usually only a limited time available during a braking manoeuvre for a driver to recognise and react to visual feedback in a way that makes any significant improvement to energy recovery.

The document JP2006281803A discloses a brake profile that is designed to allow a driver to quickly 'jump in' and provide a strong braking force in case of an emergency.

It is also known to provide feedback to a driver by altering a brake pedal characteristic to advise a driver that increasing braking effort will involve use of a vehicle's friction brakes and thus reduce energy recovery in a braking manoeuvre. EP 2314486 discloses a vehicle with a brake pedal whose travel is divided into three segments, A, B and C. In segment A only a regenerative brake is activated to deliver an increased braking force in response to increasing pedal depression. In segment B, only the regenerative brake is activated to deliver a substantially constant braking force in response to increasing pedal depression. In segment C a friction brake is activated so that an increasing total braking force is applied to the vehicle in response to increasing pedal depression. Segment B provides a plateau in the brake pedal characteristic which helps a driver of the vehicle find a brake pedal positon that represents optimum braking.

In practice, though, provision of a plateau in the braking characteristic does not make it particularly easy to identify a brake pedal position for optimum braking, especially for a relatively unskilled driver. It is necessary for the driver to sense that further brake pedal depression is not increasing braking effort, and then stop further pedal depression in order to maintain optimum braking. A short plateau in the braking characteristic makes it difficult to detect and so a driver may easily over-run it causing the friction brakes to deploy. A long plateau is easier to detect, but can give the brake pedal an unnatural feel and/or cause a driver to panic because a request for increased braking effort (by further depression of the brake pedal) is not matched by an increase in braking effort.

Embodiments of the present invention seek to address these problems.

### Summary of the Invention

According to the present invention there is provided a braking system for a vehicle, the braking system comprising:
a dissipative brake;
a regenerative brake;
a driver brake control operable against a support force by a driver of the vehicle to demand a braking effort from the braking system, the driver brake control arranged to travel from a release position to a fully operative position, wherein:
   in a first part of the travel of the driver brake control the support force varies with travel with a gradient up to a first maximum positive gradient;
   in a second part of the travel of the driver brake control the support force varies with travel with a gradient up to a second maximum positive gradient; and
   in an intermediate part of the travel of the driver brake control extending from the end of the first part to the beginning of the second part the support force increases with travel with a positive gradient that exceeds both the first and second maximum positive gradients; and
   a brake control system arranged to deploy the dissipative brake and/or regenerative brake into order to provide braking effort in response to operation of the driver brake control, wherein the brake control system can operate only the regenerative brake when the driver brake control is in the first part of the travel.

Providing an increase in the gradient of the support force followed by a decrease provides a clearer signal to a driver that a particular point in travel of the brake control has been reached than with prior art systems. This can be used to inform the driver of braking system operation and facilitate learning to use the braking system efficiently.

The support force may increase substantially linearly with travel over at least some, or all, of the first and/or second and/or intermediate part of the travel.

The gradient of the increase of support force with travel over the intermediate part of the travel may be 1.5, 2, 2.5, 3 or more times the first and/or second maximum positive gradients.

In one embodiment the support force decreases with travel at the beginning of the second part of the travel, and subsequently increases with travel over the remainder of the second part of the travel. A temporary decrease in support force provides a still clearer signal to a driver as to the position of the control.

The intermediate part of the pedal travel may be less than 10%, 7%, 5% or 3% of the available travel.

The first and second parts of the pedal travel may each occupy at least 30%, 40% or 45% of the available travel.

A minimum threshold force may have to be applied to the driver brake control to cause braking effort to be provided. This provides a so called "jump-in" characteristic to the braking system. The braking system may be arranged to provide an increasing braking effort in response to application of increased force to the driver brake control over the minimum threshold force. The increase in braking effort may vary linearly or non-linearly with force applied to the brake control.

The braking system may be arranged to provide braking effort up to a chosen level when the driver brake control is in the first part of its travel and to provide braking effort exceeding the chosen level when the driver brake control is in the second part of its travel.

The brake control system may be arranged to maintain braking effort at the chosen level when the driver brake control is in the intermediate part of the travel.

The brake control system may only operate the regenerative brake when the driver brake control is in the intermediate part of the travel.

The chosen level of braking effort may be that at which the braking system can achieve maximum or near maximum energy recovery.

The chosen level of braking effort may be predetermined for a vehicle to which the braking system is fitted and stored by the brake control system, or calculated by the brake control system on initial application of the driver brake control having regard to one or more vehicle operating conditions. Vehicle operating conditions may include one or more of: vehicle speed, the gradient on which the vehicle is travelling and the available capacity of an energy storage device which stores energy recovered by the braking system.

The chosen level of braking effort may be the maximum, or near the maximum, that can be provided by the regenerative braking system. In particular the braking system may be arranged so that the chosen level of braking effort is the maximum that can be provided by the regenerative braking system, such that provision of increased braking effort requires the dissipative brakes to be deployed.

When a force is applied to the driver brake control sufficient to cause the brake control system to provide braking effort which exceeds the chosen level, the brake control system may increase braking effort substantially linearly with increasing force applied to the driver brake control. Braking effort may increase substantially linearly over at least a range of forces applied to the driver brake control above that required to cause delivery of braking effort above the chosen level. Braking effort may increase substantially linearly with force applied to the driver brake control at a first rate up to an upper limit, and thereafter increase at a lower rate.

The braking system may comprise a force adjuster operable to adjust the support force of the driver brake control.

The brake controller may be arranged to control the force adjuster to adjust the support force. This enables desired brake control characteristics to be provided irrespective as to how braking effort is delivered.

Braking effort may remain constant or increase, but not decrease, as the brake control is moved from the release position to the fully operative position.

The driver brake control may be a brake pedal or a hand control.

At least for vehicle speeds above a predetermined minimum speed, the brake control system may be arranged to deploy the regenerative brake in preference to the dissipative brake in order to maximise energy recovery during braking.

The dissipative brake may comprise a hydraulic brake system. The dissipative brake may comprise on or more disc brakes. The braking system may comprise an electromechanical brake booster, which may comprise a force adjuster for providing an adjustable support force to the driver brake control. The braking system may comprise a hydraulic accumulator.

The brake control system may comprise an electronic control system and may be programmable.

### Detailed Description of the Invention.

In order that the invention may be more clearly understood embodiments thereof will now be described, by way of example only, with reference to the accompanying drawings, of which:
- Figure 1: is a schematic diagram of an automobile;
- Figure 2: is a schematic diagram of the braking system of the automobile of figure 1;
- Figure 3: is a graph of pedal force against brake pressure for a conventional friction braking system;
- Figures 4 to 6: are graphs of pedal force against total braking system effort for braking systems according to the invention; and
- Figure 7: is a graph of pedal travel against support/pedal force for braking systems according to the invention.

Referring to the drawings an automobile 1 has four road wheels 2. The rear wheels 2 are drivingly connected to an electric motor 3 which is electrically connected to an electric battery 4. Each road wheel 2 is provided with a dissipative disc brake 5.

A drive controller (not shown) is provided to enable a driver to cause the electric motor to propel the vehicle using energy stored in the electric battery. The automobile may also additionally comprise an internal combustion engine arranged to directly propel the automobile and/or provide electrical power to the electric motor and/or electric battery. As such it may be a so-called hybrid vehicle. These features are well known and understood and so are not described in further detail.

A brake pedal 7 is provided by which a driver of the automobile can operate its braking system. The brake pedal 7 is connected to a hydraulic master cylinder 8 via a brake control system 9 and an electromechanical brake booster 10. The master cylinder has an associated brake fluid reservoir 11 and is operable to pressurise brake fluid in pipes running from the master cylinder 8 via a hydraulic accumulator 12 to the disc brakes 5 in order to apply the disc brakes. The hydraulic accumulator 12 is operable to absorb fluid from and return fluid to the brake pipes.

The electromechanical brake booster 10 is of a known type, such as that sold under the trade mark iBooster by Robert Bosch GmbH, and comprises an electric motor or other electrical actuator which is operable to apply force to the master cylinder in order to operate the disc brakes. Force may be applied to augment a force applied by the driver via the brake pedal 7, or could be applied independently of operation of the brake pedal, for example in an emergency situation. The brake booster also comprises a force adjuster operable to provide and/or control a support force against which the driver may depress the brake pedal.

The brake control system 9 comprises a sensor for determining the position of the brake pedal 7 and is provided with information relating to the speed of the automobile. The brake control system further comprises a regenerative brake controller for causing the motor 3 to feed current to the battery 4 and thus provide regenerative braking, and a programmable electronic control system and is operatively connected to the electromechanical brake booster 10 and hydraulic accumulator 12. The regenerative brake controller is additionally arranged to cause the hydraulic accumulator to absorb brake fluid from the brake circuit to reduce the pressure of fluid in the brake circuit and thus braking effort provided by the disc brakes as corresponding regenerative braking effort is provided by the electric motor and vice versa.

The brake control system 9 measures brake pedal position to determine demanded braking effort and controls the regeneration controller, electromechanical brake booster 10 and hydraulic accumulator 12 to provide braking effort, and maintain a desired support force on the braking pedal as discussed further below. The brake control system is programmed to employ regenerative braking wherever possible in order to maximise energy recovery.

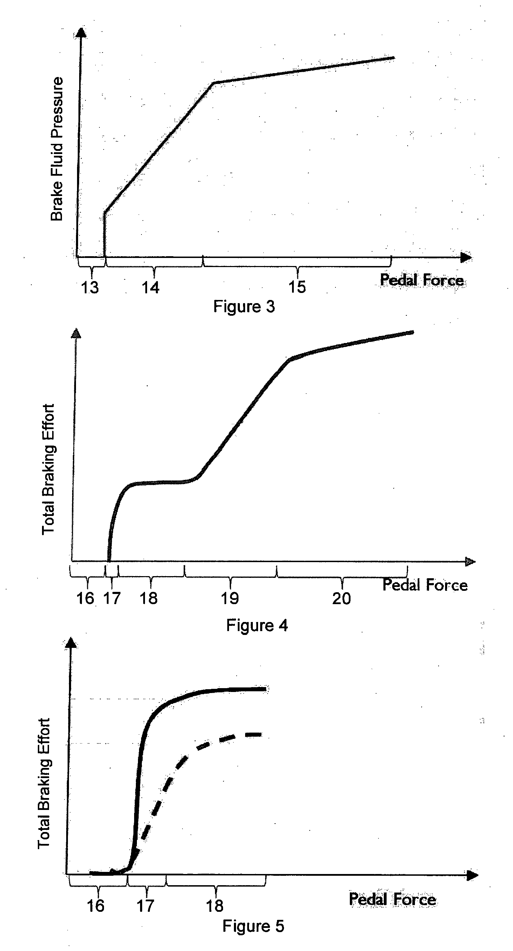

Figure 3 is a graph of force applied to a brake pedal (pedal force) on the horizontal axis against brake fluid pressure on the vertical axis for a conventional automotive servo assisted hydraulic brake system. With such a system brake fluid pressure is essentially directly related to the braking effort provided by the braking system. The graph shows a characteristic curve for the braking system. This divides into three sections. In the first section 13 there is no increase in brake fluid pressure in response to the application of force to the brake pedal. The second section 14 begins when a threshold pedal force is reached, at which brake fluid pressure increases sharply to a predetermined value and thereafter increases substantially linearly with pedal force. In the third section 15 brake fluid pressure continues to increase substantially linearly with pedal force but at a reduced gradient to the second section. This is because, in the second section, the brake servo is providing assistance to the driver in proportion to the driver's effort in pressing the brake pedal. At the end of the second section the servo is providing the maximum assistive force it is able to deliver. Any increase in brake fluid pressure is then only obtained as a direct result of increased force applied to the pedal.

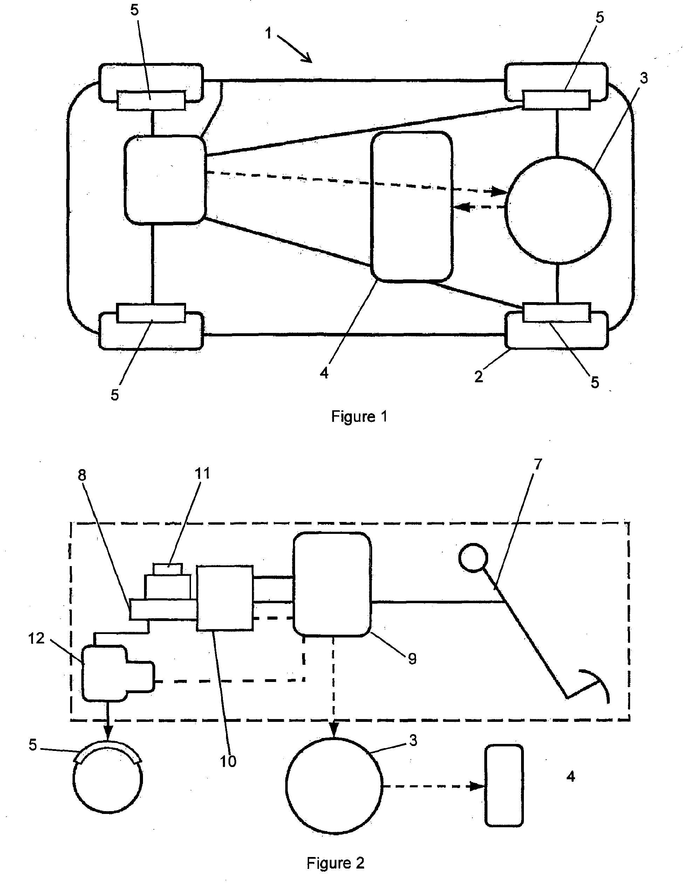

For automobiles with both friction and regenerative braking systems the conventional approach is to use regenerative braking where possible in order to maximise energy recovery and to use friction braking as necessary so that the relationship between overall braking effort provided by the two braking systems and brake pedal force is substantially the same as the relationship between brake fluid pressure and pedal force shown in figure 1. This can be achieved with a braking system of the type shown in figures 1 and 2 with the brake booster 10 and regenerative brake controller working together to deliver the desired braking characteristic. Where a requested level of braking effort can be partially or wholly met by regenerative braking the regenerative brake controller will cause the motor 3 to retard the vehicle and deliver electrical energy to the battery 4 and simultaneously cause the hydraulic accumulator to 12 to make a corresponding reduction in braking effort provided by the disc brakes 5. The brake booster 10 will, as necessary, adjust a supporting force on the brake pedal so that pedal support force is maintained when brake fluid pressure is reduced. When regenerative braking is no longer available, for example because the vehicle speed has dropped below a threshold speed, because a demanded braking effort exceeds that which can be provided by the motor or the battery 4 is fully charged, the regenerative brake controller causes the hydraulic accumulator 12 to return fluid to the brake pipe activating, or increasing braking effort contributed by, the disc brakes.

With a braking system according to the invention the relationship between pedal position and pedal support force (i.e. the pedal force required to depress the pedal to a particular position) and the characteristic curve of the braking system are modified in order to provide feedback on the operation of the braking system to the driver through the brake pedal to facilitate efficient use of the braking system. This is achieved through reprogramming of the brake control system to modify operation of the brake booster 10.

Figure 4 is a graph of force applied to a brake pedal (pedal force) on the horizontal axis against total braking effort for the braking system shown in figures 1 and 2 configured to operate in accordance with the invention. Total braking effort is the sum of braking effort provided by the electric motor and disc brake systems. The braking system is arranged to maximise use of the motor to provide braking effort wherever possible.

Referring to figure 4 the braking control system is programmed so that the characteristic curve has five distinct adjoining sections. The first section 16 is substantially the same as that of the characteristic curve of a conventional friction braking system, such that for brake pedal forces below a threshold pressure no braking effort is provided. The second section 17 begins at the threshold pedal force and braking effort increases sharply to a predetermined level. In the third section the curve flattens out so that there is substantially no increase in braking effort with an increase in pedal force. In the fourth section braking effort increases substantially linearly with pedal force, similar to the second section of the conventional characteristic curve. In the fifth section braking effort continues to increase linearly with pedal force, but at a reduced gradient to the fourth section, as with the third section of the characteristic curve of a conventional braking system and for the same reason.

Figure 5 shows an enlargement of the first 16, second 17 and beginning of the third 18 sections of the curve of figure 4 in a solid line and an alternative curve in a broken line. The broken line shows a more gradual increase in braking effort with pedal force over an extended second section of that curve. This provides for a brake pedal which offers more resistance during initial braking to provide the driver with a more "sporty" feel where greater pedal force is required to obtain braking effort.

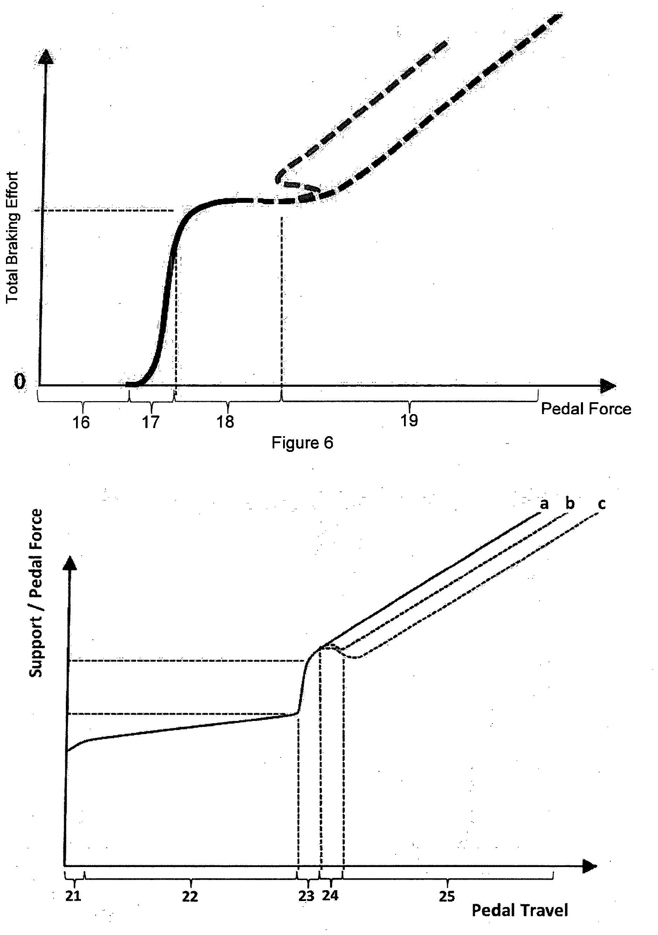

Figure 6 shows an enlargement of the first to third 16, 17, 18 and beginning of the fourth 19 part of the curve of figure 4 in a solid line and an alternative curve in a broken line (which overlaps the solid line over the first to third and part of the fourth parts of the curve). With the alternative curve the required pedal force to achieve increased braking effort temporarily decreases at the end of the third section 18 of the curve.

Embodiments of the relationship between pedal travel and support force for the described embodiments of the braking system, having characteristic curves as shown in figures 4 to 6, are shown in figure 7. Figure 7 plots pedal travel against support force. Pedal travel represents the distance moved by the brake pedal from a release position, to which it returns when no force is applied to the pedal, to a fully operative position, towards which it may be urged by a driver against the support force provided by the braking system. In the described the example the support force is provided by the master cylinder 8 as modified by the force adjuster which forms part of the brake booster 10.

Pedal travel could be measured as a distance, or for a pivotally mounted pedal by the amount of rotation of the pedal about its pivot axis. The measure could be absolute or a representation of a proportion of the available travel.

Figure 7 shows three different curves relating pedal travel and support force, support force being equivalent to the force a user needs to apply to the pedal to obtain the corresponding amount of pedal travel. These are labelled a (shown as a solid line), and b and c (shown as broken lines that overlap part of the solid line a). Each curve is made up of four or five sections.

Referring first to curve a, this has a first section 21 in which the support force rises substantially linearly with travel with a first gradient. The first section extends over about 5% of the available pedal travel and leads into a second section 22. The second section extends over about 40% of the available pedal travel, over which the support force continues to rise substantially linearly with pedal travel with a second gradient which is lower than the first. Thus, on initial movement, the pedal will feel to load up relatively quickly over a relatively short travel and then move progressively against a gradually increasing support force.

The first and second sections represent a pedal movement of about 35-45mm and a pedal force of about 30-40N is required to move the pedal to the end of the second section.

The second section 22 leads into a third section 23, 24. The third section extends over about 2% of the available pedal travel, in this case about 2mm, over which the support force continues to rise substantially linearly with pedal travel with a third gradient which is significantly higher than the first or second gradients. Thus, as the brake pedal is moved into the third section it will feel significantly stiffer, almost as if a stop is being encountered. An additional force of 10-15N is required to move the pedal through the third section.

The third section 23 then leads into a further section 24, 25. The further section extends over the remainder of the available pedal travel, so a little over half the available travel. In the further section the support force continues to rise substantially linearly with pedal travel with a third gradient which is a little higher than the second gradient but significantly lower than the third gradient. Thus, as the brake pedal is moved into the further section it will move more easily, although be a little stiffer than when moving in the second section.

As the gradient of the support force reduces as the pedal moves into the further section the transition of the pedal through the third section will feel to a driver like a detent, or some other temporary increased resistance to movement, which is overcome by pushing the pedal further. This gives clear feedback to the driver that the pedal has moved from a first part of its travel, comprising the first and second sections, to a second part comprising the further section.

Referring now to curves b and c, these are the same as curve a over the first 21, second 22 and third 23 sections, but differ by the addition of a fourth section 24 which precedes the further section 25. The fourth section 24 extends over between about 5% (curve b) and 7% (curve c) of the available pedal travel, some 4-5mm in this example. In this fourth section the gradient of support force with pedal travel is negative. This will give more pronounced feedback to a driver that the pedal has moved between first and second parts of its travel as the pedal will very briefly feel to be loosening up before it moves into the further section of travel 25 where the support force gradient becomes positive again. With these curves the pedal will feel to a driver somewhat as if it has an "over centre" action as it moves through the third and fourth sections of its travel.

The brake controller is arranged so that the third section of pedal travel, where the gradient of support force with pedal travel increases, lies within the third section 18 of the characteristic curve of the braking system. Indeed the beginning of the third section of pedal travel preferably substantially coincides with the beginning of the third section of the characteristic curve 18. This is to say, the force required to move the pedal to the beginning of the third section of pedal travel is substantially equal to the pedal force at which the characteristic curve flattens out.

The brake controller is further arranged so that the third section of pedal travel ends (and so the point from which the gradient of support force with pedal travel reduces) within the third section 18 of the characteristic curve of the braking system. Indeed the end of the third section of pedal travel preferably substantially coincides with the end the third section of the characteristic curve 18. This is to say, the force required to move the pedal to the end of the third section of pedal travel is substantially equal to the pedal force at which the characteristic curve begins to rise, beyond its third section.

Thus, curve a representing variation of support force with pedal travel can yield a characteristic curve as shown in figures 4 to 6 in a solid line. Curves b and c can yield a characteristic curve as shown in figure 6 by the broken line.

As discussed above, this alternative curve provides the driver with a more obvious indication that the brake pedal is passing a particular point in its travel. Importantly, though, in all curves braking effort always increases or remains constant with increased pedal travel so that additional movement of the pedal, including panic braking, cannot lead to a decrease in braking effort.

Associating the third section of pedal travel 23 with a region 18 of the characteristic curve where braking effort does not increase with pedal force or travel serves to inform the driver that a predetermined level of braking effort has been reached. This predetermined level of braking effort is chosen as the level of effort at which a maximum or near maximum level of energy recovery can be achieved. For example, it could be the level of braking effort that can be provided by the motor alone, such that a demand for further braking effort will be met by deployment of the disc brakes. It could be a stored value or it could be calculated depending on vehicle operating conditions when the brake pedal is initially depressed. Operating conditions might include vehicle speed, gradient on which the vehicle is travelling and state of charge of the battery. The level of braking effort at which the characteristic curve flattens out may be termed the harvest point.

The effect of the modified support force vs pedal travel and characteristic curves for the braking system is that the driver will perceive an increased resistance to travel of the brake pedal as the harvest point is reached. A sharper than previous increase in pedal force is thus required to obtain any further increase in braking effort, following which the pedal will move more easily and braking effort increases substantially linearly with pedal force. The temporary increase in resistance to pedal travel effectively creates a detent in the pedal travel. This more clearly signals to the driver that a maximum or near maximum level of energy recovery is being achieved, and that any further increase in braking effort will reduce braking efficiency, than with existing braking systems. This information is conveyed to the driver without any visual distraction and can be easily detected even though the proportion of brake pedal travel over which there is an increased gradient of support force is small. As the information is conveyed by perceived increased resistance this effectively encourages the driver not to further increase braking effort and therefore encourages efficient driving. However, in the event that more rapid deceleration is required or in an emergency situation the driver's natural instinct to push harder on the brake pedal will produce increased braking effort. The braking system is thus able to convey useful information to the driver in an intuitive, non-distracting and highly useable yet safe way.

It will be appreciated that the invention lies in the relationship between pedal travel and support force in conjunction with the characteristic curve of the braking system and that the apparatus used to implement the braking system can be altered as long as the same or an equivalent result is achieved. For example, there could be no mechanical link between the brake pedal and master cylinder, with friction braking effort being delivered entirely by the brake booster and a pedal support force being provided either by the brake booster or another actuator. With such an arrangement the hydraulic accumulator could be omitted as brake pressure in the disc brake system need only be increased when braking effort is required from the friction brake system.

The above embodiments are described by way of example only. Many variations are possible without departing from the scope of the invention as defined in the appended claims.

## Claims

1. A braking system for a vehicle (1), the braking system comprising:
a dissipative brake (5);
a regenerative brake;
a driver brake control (7) operable against a support force by a driver of the vehicle to demand a braking effort from the braking system, the driver brake control (7) arranged to travel from a release position to a fully operative position, wherein:
in a first part (22) of the travel of the driver brake control (7) the support force varies with travel with a gradient up to a first maximum positive gradient;
in a second part (25) of the travel of the driver brake control (7) the support force varies with travel with a gradient up to a second maximum positive gradient; and
in an intermediate part of the travel of the driver brake control (7) extending from the end of the first part (22) to the beginning of the second part (25) the support force increases with travel with a positive gradient that exceeds both the first and second maximum positive gradients; and
a brake control system (9) arranged to deploy the dissipative brake (5) and/or regenerative brake into order to provide braking effort in response to operation of the driver brake control (7), wherein the brake control system (9) can operate only the regenerative brake when the driver brake control (7) is in the first part (22) of the travel.

2. A braking system as claimed in claim 1 wherein the support force increases substantially linearly with travel over at least some of the first part (22) of the travel.

3. A braking system as claimed in either claim 1 or 2 wherein the support force increases substantially linearly with travel over the second part (25) of the travel.

4. A braking system as claimed in either claim 1 or 2 wherein the support force decreases with travel at the beginning of the second part (25) of the travel, and subsequently increases with travel over the remainder of the second part (25) of the travel.

5. A braking system as claimed in any preceding claim wherein the support force increases substantially linearly with travel over the intermediate part of the travel.

6. A braking system as claimed in any preceding claim wherein the intermediate part of the travel is less than 5% of the available travel.

7. A braking system as claimed in any preceding claim wherein the first and second parts of the travel each occupy at least 40% of the available travel.

8. A braking system as claimed in any preceding claim wherein the brake control system is arranged to maintain braking effort when the driver brake control is in the intermediate part of the travel.

9. A braking system as claimed in any preceding claim wherein the brake control system can operate only the regenerative brake when the driver brake control is in the intermediate part of the travel.

10. A braking system as claimed in any preceding claim wherein braking effort in the intermediate part of the travel is that at which the braking system can achieve maximum or near maximum energy recovery, or is the maximum, or near the maximum, that can be provided by the regenerative braking system.

11. A braking system as claimed in any preceding claim wherein the braking effort in the intermediate part of the travel is predetermined for a vehicle to which the braking system is fitted and stored by the brake control system, or wherein the chosen level of braking effort is calculated by the brake control system on initial application of the driver brake control having regard to one or more vehicle operating conditions, the vehicle operating conditions including on or more of: vehicle speed, the gradient on which the vehicle is travelling and the available capacity of an energy storage device which stores energy recovered by the braking.

12. A braking system as claimed in any preceding claim further comprising a force adjuster operable to adjust the support force of the driver brake control.

13. A braking system as claimed in any preceding claim wherein braking effort remains constant or increases, but does not decrease, as the brake control is moved from the release position to the fully operative position.

14. A braking system as claimed in any preceding claim wherein the driver brake control is a brake pedal.

15. A vehicle, such as an automobile, comprising a braking system as claimed in any preceding claim.

## Patentansprüche

1. Bremssystem für ein Fahrzeug (1), wobei das Bremssystem umfasst:
eine dissipative Bremse (5);
eine regenerative Bremse;
eine Fahrerbremssteuerung (7), die gegen eine Unterstützungskraft durch einen Fahrer des Fahrzeugs betreibbar ist, um eine Bremskraft von dem Bremssystem anzufordern, wobei die Fahrerbremssteuerung (7) dazu ausgelegt ist, einen Weg von einer Löseposition zu einer volloperativen Position zurückzulegen, wobei:
in einem ersten Teil (22) des Wegs der Fahrerbremssteuerung (7) die Unterstützungskraft mit dem Weg mit einem Gradienten bis zu einem ersten maximalen positiven Gradienten variiert;
in einem zweiten Teil (25) des Wegs der Fahrerbremssteuerung (7) die Unterstützungskraft mit dem Weg mit einem Gradienten bis zu einem zweiten maximalen positiven Gradienten variiert; und
in einem Zwischenteil des Wegs der Fahrerbremssteuerung (7), der sich von dem Ende des ersten Teils (22) bis zum Anfang des zweiten Teils (25) erstreckt, die Unterstützungskraft mit dem Weg mit einem positiven Gradienten zunimmt, der sowohl den ersten als auch den zweiten maximalen positiven Gradienten übersteigt; und
ein Bremssteuersystem (9), das dazu ausgelegt ist, die dissipative Bremse (5) und/oder die regenerative Bremse in Betrieb zu setzen, um eine Bremskraft in Antwort auf die Betätigung der Fahrerbremssteuerung (7) bereit zu stellen, wobei das Bremssteuersystem (9) nur die regenerative Bremse betätigen kann, wenn die Fahrerbremssteuerung (7) in dem ersten Teil (22) des Wegs ist.

2. Bremssystem nach Anspruch 1, wobei die Unterstützungskraft im Wesentlichen linear mit dem Weg über wenigstens den ersten Teil (22) des Wegs zunimmt.

3. Bremssystem nach Anspruch 1 oder 2, wobei die Unterstützungskraft im Wesentlichen linear mit dem Weg über den zweiten Teil (25) des Wegs zunimmt.

4. Bremssystem nach Anspruch 1 oder 2, wobei die Unterstützungskraft mit dem Weg am Anfang des zweiten Teils (25) des Wegs abnimmt, und anschließend mit dem Weg über den Rest des zweiten Teils (25) des Wegs zunimmt.

5. Bremssystem nach einem der vorhergehenden Ansprüche, wobei die Unterstützungskraft im Wesentlichen linear mit dem Weg über den Zwischenteil des Wegs zunimmt.

6. Bremssystem nach einem der vorhergehenden Ansprüche, wobei der Zwischenteil des Wegs weniger als 5 % des verfügbaren Wegs ist.

7. Bremssystem nach einem der vorhergehenden Ansprüche, wobei der erste und der zweite Teil des Wegs jeweils wenigstens 40 % des verfügbaren Wegs einnehmen.

8. Bremssystem nach einem der vorhergehenden Ansprüche, wobei das Bremssteuersystem dazu ausgelegt ist, die Bremskraft beizubehalten, wenn die Fahrerbremssteuerung in dem Zwischenteil des Wegs ist.

9. Bremssystem nach einem der vorhergehenden Ansprüche, wobei das Bremssteuersystem nur die regenerative Bremse betätigen kann, wenn die Fahrerbremssteuerung in dem Zwischenteil des Wegs ist.

10. Bremssystem nach einem der vorhergehenden Ansprüche, wobei die Bremskraft in dem Zwischenteil des Wegs diejenige ist, bei der das Bremssystem eine maximale oder nahezu maximale Energierückgewinnung erzielen kann, oder das Maximum oder nahe dem Maximum ist, das durch das regenerative Bremssystem geliefert werden kann.

11. Bremssystem nach einem der vorhergehenden Ansprüche, wobei die Bremskraft in dem Zwischenteil des Wegs für ein Fahrzeug, bei dem das Bremssystem eingebaut ist, vorbestimmt und durch das Bremssteuersystem gespeichert ist, oder wobei das gewählte Niveau der Bremskraft durch das Bremssteuersystem berechnet ist bei einer anfänglichen Anwendung der Fahrerbremssteuerung, bezogen auf eine oder mehr Fahrzeugbetriebsbedingungen, wobei die Fahrzeugbetriebsbedingungen eine oder mehr von folgenden umfassen: Fahrzeuggeschwindigkeit, das Gefälle, auf dem das Fahrzeug fährt, und die verfügbare Kapazität einer Energiespeichervorrichtung, die Energie speichert, die durch die Bremse zurückgewonnen ist.

12. Bremssystem nach einem der vorhergehenden Ansprüche, ferner umfassend eine Krafteinstelleinrichtung, die zum Einstellen der Unterstützungskraft der Fahrerbremssteuerung betreibbar ist.

13. Bremssystem nach einem der vorhergehenden Ansprüche, wobei die Bremskraft konstant bleibt oder zunimmt, jedoch nicht abnimmt, wenn die Bremssteuerung von der Löseposition zu der volloperativen Position bewegt wird.

14. Bremssystem nach einem der vorhergehenden Ansprüche, wobei die Fahrerbremssteuerung ein Bremspedal ist.

15. Fahrzeug, beispielweise ein Automobil, umfassend ein Bremssystem nach einem der vorhergehenden Ansprüche.

## Revendications

1. Système de freinage d'un véhicule (1), le système de freinage comportant :
un frein (5) dissipatif ;
un frein régénératif ;
une commande (7) de frein conducteur, pouvant être mise en fonctionnement, à l'encontre d'une force de support, par un conducteur du véhicule pour exiger un effort de freinage du système de freinage, la commande (7) de frein conducteur étant disposée pour se déplacer d'une position desserrée à une position complètement fonctionnelle, dans lequel :
dans une première partie (22) du déplacement de la commande (7) de frein conducteur, la force de support varie durant le déplacement avec un gradient jusqu'à un premier gradient positif maximum ;
dans une deuxième partie (25) du déplacement de la commande (7) de frein conducteur, la force de support varie durant le déplacement avec un gradient jusqu'à un deuxième gradient positif maximum ; et dans une partie intermédiaire du déplacement de la commande (7) de frein conducteur, s'étendant de la fin de la première partie (22) au début de la deuxième partie (25), la force de support augmente durant le déplacement avec un gradient positif supérieur à chacun des premier et deuxième gradients positifs maximum ; et
un système (9) de commande de frein disposé pour déployer le frein (5) dissipatif et/ou le frein régénératif, de manière à fournir un effort de freinage en réponse au fonctionnement de la commande (7) de frein conducteur, dans lequel le système (9) de commande de freinage peut faire fonctionner seulement le frein régénératif, quand la commande (7) de frein conducteur est dans la première partie (22) du déplacement.

2. Système de freinage suivant la revendication 1, dans lequel la force de support augmente sensiblement linéairement avec le déplacement sur au moins une partie de la première partie (22) du déplacement.

3. Système de freinage suivant la revendication 1 ou 2, dans lequel la force de support augmente sensiblement linéairement avec le déplacement sur la deuxième partie (25) du déplacement.

4. Système de freinage suivant la revendication 1 ou 2, dans lequel la force de support diminue avec le déplacement au début de la deuxième partie (25) du déplacement, et augmente sensiblement avec le déplacement sur la partie restante de la deuxième partie (25) du déplacement.

5. Système de freinage suivant l'une quelconque des revendications précédentes, dans lequel la force de support augmente substantiellement linéairement avec le déplacement sur la partie intermédiaire du déplacement.

6. Système de freinage suivant l'une quelconque des revendications précédentes, dans lequel la partie intermédiaire du déplacement représente moins de 5% du déplacement disponible.

7. Système de freinage suivant l'une quelconque des revendications précédentes, dans lequel les première et deuxième parties du déplacement occupent chacune au moins 40% du déplacement disponible.

8. Système de freinage suivant l'une quelconque des revendications précédentes, dans lequel le système de commande de frein est disposé pour maintenir l'effort de freinage, quand la commande de frein conducteur est dans la partie intermédiaire du déplacement.

9. Système de freinage suivant l'une quelconque des revendications précédentes, dans lequel le système de commande de frein peut faire fonctionner seulement le frein régénératif, quand la commande de frein conducteur est dans la partie intermédiaire du déplacement.

10. Système de freinage suivant l'une quelconque des revendications précédentes, dans lequel l'effort de freinage dans la partie intermédiaire du déplacement est celui où le système de freinage peut atteindre une énergie de récupération maximum ou proche du maximum, ou est le maximum, ou proche du maximum, qui peut être fourni par le système de freinage régénératif.

11. Système de freinage suivant l'une quelconque des revendications précédentes, dans lequel l'effort de freinage dans la partie intermédiaire du déplacement est déterminé à l'avance pour un véhicule auquel le système de frein est adapté et mis en mémoire par le système de commande de frein, ou dans lequel le niveau d'effort de freinage choisi est calculé par le système de commande de freinage en fonction d'une application initiale de la commande de frein conducteur en considération d'une ou de plusieurs conditions de fonctionnement du véhicule, les conditions de fonctionnement du véhicule comportant une ou plusieurs de : vitesse du véhicule, le gradient sur lequel le véhicule se déplace et la capacité disponible d'un dispositif de conservation d'énergie, qui accumule l'énergie récupérée par le freinage.

12. Système de freinage suivant l'une quelconque des revendications précédentes, comportant un régleur de force pouvant fonctionner pour régler la force de support de la commande de frein conducteur.

13. Système de freinage suivant l'une quelconque des revendications précédentes, dans lequel l'effort de freinage reste constant ou augmente, mais ne diminue pas, alors que la commande de frein est déplacée de la position desserrée à la position complètement fonctionnelle.

14. Système de freinage suivant l'une quelconque des revendications précédentes, dans lequel la commande de frein conducteur est une pédale de frein.

15. Véhicule, tel qu'une automobile, comportant un système de freinage suivant l'une quelconque des revendications précédentes.
